# EUROPEAN PATENT APPLICATION

(11) **EP 4 796 401 A1**
(43) Date of publication of application: **26.08.2026**
(21) Application number: 24878564.4
(22) Date of filing: 04.07.2024
(51) Int. Cl.: B60W 30/10, B60W 40/10, B60W 60/00, B60W 10/08, B60W 30/045

(54) **VEHICLE CONTROL METHOD, MEDIUM, AND VEHICLE**

(30) Priority: 19.10.2023 CN 202311373582
(71) Applicant: BYD Company Limited, Shenzhen, Guangdong 518118 (CN)
(72) Inventor: YANG, Dongsheng, Shenzhen, Guangdong 518118 (CN); JIANG, Jianxin, Shenzhen, Guangdong 518118 (CN); HAN, Bing, Shenzhen, Guangdong 518118 (CN); TU, Xiaoxiao, Shenzhen, Guangdong 518118 (CN); LIU, Jiangtao, Shenzhen, Guangdong 518118 (CN)
(74) Representative: Taor, Simon Edward William
(86) International application number: PCT/CN2024/103695
(87) International publication number: WO 2025/081911

(57) **Abstract**

A vehicle control method, a medium, and a vehicle relate to the field of vehicle control technologies. The method includes: determining a tracking deviation between a position of a vehicle and a planned path of the vehicle; and controlling, according to the tracking deviation, four independent wheel motors of the vehicle to output torque, to enable the vehicle to return to the planned path.

## Description

### CROSS-REFERENCES TO RELATED APPLICATIONS

The present disclosure claims priority to Chinese Patent Application No. 202311373582.3, filed with the China National Intellectual Property Administration on October 19, 2023 and entitled "VEHICLE CONTROL METHOD, MEDIUM, AND VEHICLE", which is incorporated herein by reference in its entirety.

### TECHNICAL FIELD

The present disclosure relates to the field of vehicle control technologies, and specifically, to a vehicle control method, a medium, and a vehicle.

### BACKGROUND

An electric power steering system (EPS) of a conventional vehicle is based on an Ackermann steering model. When a steering wheel angle is fixed, a driving trajectory of the vehicle is approximately circular, and the driving trajectory may be changed by adjusting the steering wheel angle.

### SUMMARY

A first aspect of embodiments of the present disclosure provides a vehicle control method, including:
determining a tracking deviation between a position of the vehicle and a planned path of the vehicle; and
controlling, according to the tracking deviation, four independent wheel motors of the vehicle to output torque, to enable the vehicle to return to the planned path.

Optionally, the controlling, according to the tracking deviation, four independent wheel motors of the vehicle to output torque, to enable the vehicle to return to the planned path includes:
determining a first path point of a preview location of the vehicle on the planned path; and
controlling, according to the first path point and the tracking deviation, the four independent wheel motors of the vehicle to output the torque, to enable the vehicle to return to the planned path.

Optionally, the method further includes:
obtaining vehicle speed information of the vehicle; and
the determining a first path point of a preview location of the vehicle on the planned path includes:
   determining a second path point corresponding to the position of the vehicle on the planned path; and
   determining the first path point according to the second path point and the vehicle speed information.

Optionally, the determining the first path point according to the second path point and the vehicle speed information includes:
determining a preview distance according to the vehicle speed information; and
determining the first path point according to the second path point and the preview distance.

Optionally, the determining the first path point according to the second path point and the preview distance includes:
determining the preview location on the planned path according to the second path point and the preview distance;
determining first trajectory points adjacent to the preview location on the planned path;
performing interpolation between the first trajectory points to obtain a plurality of first data points; and
determining the first path point according to the first data points adjacent to the preview location.

Optionally, the determining a tracking deviation between a position of the vehicle and a planned path of the vehicle includes:
determining a reference data point adjacent to the position of the vehicle on the planned path; and
determining the tracking deviation according to the reference data point and pose information corresponding to the position of the vehicle.

Optionally, the determining a reference data point adjacent to the position of the vehicle on the planned path includes:
determining second trajectory points adjacent to the position of the vehicle on the planned path;
performing interpolation between the second trajectory points to obtain a plurality of second data points; and
determining, from the plurality of second data points, a data point whose distance from the position of the vehicle is less than or equal to a distance threshold as the reference data point.

Optionally, the controlling, according to the tracking deviation, four independent wheel motors of the vehicle to output torque, to enable the vehicle to return to the planned path includes:
determining, according to the tracking deviation, a required steering wheel angle for the vehicle to return to the planned path; and
according to the required steering wheel angle, controlling a steering wheel angle and controlling the four independent wheel motors to output the torque, so that a sum of the steering wheel angle and a compensation angle corresponding to the torque output by the four independent wheel motors meets the required steering wheel angle.

Optionally, the according to the required steering wheel angle, controlling a steering wheel angle and controlling the four independent wheel motors to output the torque includes:
according to the required steering wheel angle, controlling the steering wheel angle to remain unchanged, and determining a difference between the steering wheel angle and the required steering wheel angle as a to-be-compensated angle; and
controlling the four independent wheel motors to output the torque to compensate for the to-be-compensated angle.

Optionally, the according to the required steering wheel angle, controlling a steering wheel angle and controlling the four independent wheel motors to output the torque includes:
when the required steering wheel angle is less than or equal to a maximum steering wheel angle, according to the required steering wheel angle, controlling the steering wheel angle to gradually increase and controlling the four independent wheel motors to output the torque, to compensate for a difference value between an increased steering wheel angle and the required steering wheel angle; and
when the required steering wheel angle is greater than the maximum steering wheel angle, controlling the steering wheel angle to increase to the maximum steering wheel angle, and controlling the four independent wheel motors to output the torque, to compensate for a difference value between the maximum steering wheel angle and the required steering wheel angle.

Optionally, the method further includes:
obtaining the pose information of the vehicle, parking space information around the vehicle, and obstacle information; and
performing trajectory planning according to the pose information, the parking space information, the obstacle information, and a target turning radius achieved when the vehicle is driven by the four independent wheel motors, to obtain the planned path, where the target turning radius is less than a turning radius achieved when the vehicle steers at the maximum steering wheel angle.

Optionally, the determining a second path point corresponding to the position of the vehicle on the planned path includes:
obtaining the pose information and the planned path of the vehicle; and
determining, according to the pose information, the second path point corresponding to the position of the vehicle on the planned path.

A second aspect of embodiments of the present disclosure provides a computer-readable storage medium. The computer-readable storage medium stores computer program instructions, and when the program instructions are executed by a processor, the vehicle control method provided in the first aspect of embodiments of the present disclosure is implemented.

A third aspect of embodiments of the present disclosure provides a vehicle, including:
a storage apparatus, configured to store a computer program; and
a processing apparatus, configured to execute the computer program, to implement the vehicle control method provided in the first aspect of embodiments of the present disclosure.

Optionally, the vehicle includes four motors, and each motor correspondingly drives one wheel.

In embodiments of the present disclosure, the tracking deviation between the position of the vehicle and the planned path of the vehicle is determined, and the four independent wheel motors of the vehicle are controlled according to the tracking deviation to output the torque, to enable the vehicle to return to the planned path. In this way, when the tracking deviation occurs as the vehicle drives along the planned path, the four independent wheel motors may be controlled to output the torque, to enable the vehicle to return to the planned path, thereby eliminating a need to replan a new path and improving driver experience.

Other features and advantages of the present disclosure are described in detail in the following description of embodiments.

### BRIEF DESCRIPTION OF DRAWINGS

The accompanying drawings herein are incorporated into this specification and constitute a part of this specification, to show embodiments according to the present disclosure, and are used, together with this specification, to explain the principle of the present disclosure.
FIG. 1 is a flowchart of a vehicle control method according to an example embodiment;
FIG. 2 is a flowchart of a method for determining a first path point in a vehicle control method according to an example embodiment;
FIG. 3 is a flowchart of a method for determining a reference data point in a vehicle control method according to an example embodiment;
FIG. 4 is a flowchart of a method for determining a target turning radius in a vehicle control method according to an example embodiment;
FIG. 5 is a block diagram of a control apparatus for a vehicle according to an example embodiment;
FIG. 6 is a block diagram of a vehicle control system according to an example embodiment; and
FIG. 7 is a block diagram of a vehicle according to an example embodiment.

### DESCRIPTION OF EMBODIMENTS

Example embodiments are described in detail herein, and examples of the example embodiments are presented in the accompanying drawings. When the following description relates to the accompanying drawings, unless specified otherwise, same numbers in different accompanying drawings represent a same or similar element. Implementations described in the following example embodiments do not represent all implementations consistent with the present disclosure. On the contrary, the implementations are only examples of apparatuses and methods that are described in the appended claims in detail and that are consistent with some aspects of the present disclosure.

A power steering (EPS) system of a conventional vehicle is based on an Ackermann steering model. A larger steering wheel angle indicates a smaller corresponding turning radius. A smaller steering wheel angle indicates a larger corresponding turning radius. A steering wheel angle is adjusted to change a driving trajectory. When the steering wheel angle reaches a maximum, the turning radius may no longer be reduced. When the vehicle includes four independent wheel motors, the driving trajectory of the vehicle may be changed by using the electric power steering system, or the driving trajectory of the vehicle may be changed by controlling the steering wheel angle and adjusting a torque magnitude and a torque direction of the four independent motors in combination with the electric power steering system.

In a related technology, a turning radius during vehicle steering controlled by using the electric power steering system in combination with the torque output by the four independent wheel motors may be less than a turning radius achieved when a steering wheel is at the maximum angle by using only the electric power steering system. If the steering wheel angle is controlled by using only the electric power steering system and a planned path is followed, a large tracking deviation occurs when a curvature in the planned path corresponds to a turning radius that is less than the turning radius achieved when the steering wheel is at the maximum angle. When there is a tracking deviation in a driving process in which the vehicle drives along the planned path, the steering wheel angle may be quickly controlled and adjusted by using the electric power steering system, to control the vehicle to return to follow the planned path, but an excessive change in the steering wheel angle increases shaking of a vehicle body and affects driving experience of a driver, and if the steering wheel angle reaches a maximum value, the electric power steering system can no longer compensate for the tracking deviation by increasing the steering wheel angle.

Based on the problems existing in the related technology, the present disclosure provides a vehicle control method, a medium, and a vehicle.

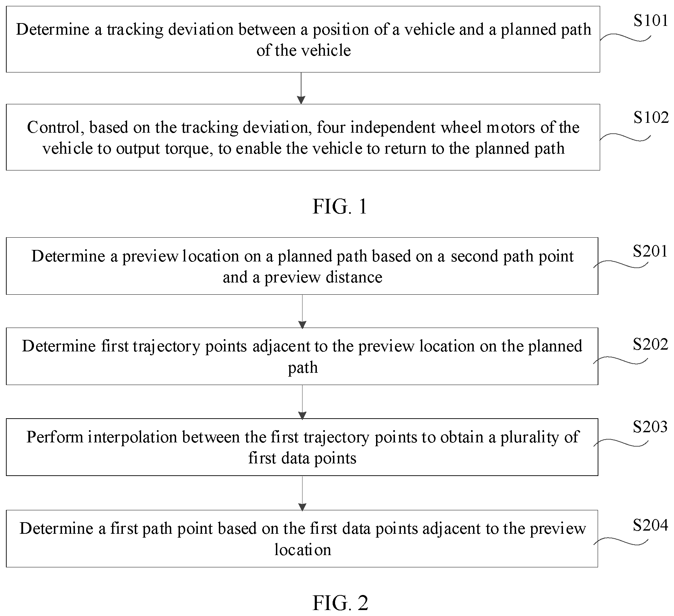

FIG. 1 is a flowchart of a vehicle control method according to an example embodiment. As shown in FIG. 1, the method includes the following steps.

S101: Determine a tracking deviation between a position of the vehicle and a planned path of the vehicle.

For example, in a driving process of the vehicle, a safe and collision-free planned path may be planned by using information required for planning a driving path and an algorithm for planning the traveling path. The planned path includes a plurality of trajectory points, and each trajectory point includes information such as curvature information, a turning radius, a vehicle heading angle, a driving speed, and a driving distance. The tracking deviation occurring when the vehicle follows the planned path may be determined according to a path point corresponding to a position of the vehicle on the planned path and the trajectory point on the planned path.

S102: Control, according to the tracking deviation, four independent wheel motors of the vehicle to output torque, to enable the vehicle to return to the planned path.

For example, when the tracking deviation occurs or the tracking deviation may occur in the driving process of the vehicle, the four independent wheel motors of the vehicle may be controlled to output the torque, for example, driving directions, forward or backward movement, rotation speeds, acceleration or deceleration of four wheels may be controlled, to change a turning radius of the vehicle. In this way, the vehicle may be controlled to return to the planned path and continue to follow the planned path for driving without re-planning a new path. Herein, a turning radius during vehicle steering controlled by using the torque output by the four independent wheel motors in combination with an electric power steering system is less than a turning radius achieved when vehicle steering is controlled at the maximum steering wheel angle by using only the electric power steering system.

For example, when the tracking deviation is compensated, remaining required torque used to compensate for the tracking deviation may be obtained by using a magnitude of torque corresponding to the maximum steering wheel angle, or a magnitude of torque corresponding to a current steering wheel angle, and a magnitude of vehicle torque required when the vehicle returns to the planned path. Alternatively, a remaining compensation angle used to compensate for the tracking deviation may be obtained according to the maximum steering wheel angle, the current steering wheel angle, and a steering wheel angle required when the vehicle returns to the planned path. When the planned path is followed only by controlling the steering wheel angle, the remaining required torque or the remaining compensation angle may be zero. In this case, vehicle steering is controlled by using only the electric power steering system. To avoid shaking of the vehicle body caused by back-and-forth movement of the steering wheel, the steering wheel angle may be controlled to remain unchanged, and the steering wheel angle may be compensated by using the torque output by the four independent wheel motors. In this case, vehicle steering is controlled by using the electric power steering system in combination with the torque output by the four independent wheel motors. After the tracking deviation is compensated, the vehicle may return to the planned path and continue to travel, so that the vehicle may better follow the planned path in the driving process.

In embodiments of the present disclosure, the tracking deviation between the position of the vehicle and the planned path of the vehicle is determined, and the four independent wheel motors of the vehicle are controlled, according to the tracking deviation, to output the torque, to enable the vehicle to return to the planned path. In this way, when the tracking deviation occurs as the vehicle drives along the planned path, the four independent wheel motors may be controlled to output the torque, to enable the vehicle to return to the planned path, thereby eliminating a need to replan a new path and improving driver experience.

In an optional embodiment, the controlling, according to the tracking deviation, four independent wheel motors of the vehicle to output torque, to enable the vehicle to return to the planned path includes:
determining a first path point of a preview location of the vehicle on the planned path; and
controlling, according to the first path point and the tracking deviation, the four independent wheel motors of the vehicle to output the torque, to enable the vehicle to return to the planned path.

For example, the first path point of the preview location of the vehicle on the planned path may be determined in a preview manner, and the steering wheel angle or the vehicle torque required when the vehicle returns to the planned path may be determined according to the first path point and the tracking deviation, and the tracking deviation occurring when the vehicle follows the planned path may be compensated by using the torque output by the four independent wheel motors that is used for compensating for the steering wheel angle or used for compensating for the remaining required torque corresponding to the tracking deviation.

In an optional embodiment, the method further includes:
obtaining vehicle speed information of the vehicle; and
the determining a first path point of a preview location of the vehicle on the planned path includes:
   determining a second path point corresponding to the position of the vehicle on the planned path; and
   determining the first path point according to the second path point and the vehicle speed information.

For example, the planned path includes a plurality of discrete trajectory points, and each trajectory point includes information such as coordinates, curvature information, a vehicle heading angle, a speed, and a distance. The vehicle may determine, according to pose information, the second path point corresponding to the position of the vehicle on the planned path; determine, according to the second path point corresponding to the position of the vehicle on the planned path and a preview distance corresponding to the vehicle speed information, the first path point corresponding to the preview location of the vehicle on the planned path; and control, according to the second path point and the steering wheel angle, the four independent wheel motors of the vehicle to output the torque, to compensate for the tracking deviation occurring when the vehicle follows the planned path.

In an optional embodiment, the determining the first path point according to the second path point and the vehicle speed information includes:
determining a preview distance according to the vehicle speed information; and
determining the first path point according to the second path point and the preview distance.

For example, the vehicle driving speed imposes significant impact on the preview distance. A faster vehicle speed corresponding to the vehicle speed information indicates a larger preview distance for ensuring safety and stability of vehicle traveling. In this case, it may be considered that the preview distance is proportional to the vehicle speed information. Specifically, the preview distance may be calculated by using the following formula: $S = v \times Δt + {d}_{0}$

S is the preview distance, v is the vehicle speed information, Δt is a time factor, and d₀ is a minimum preview distance. A specific value of the minimum preview distance may be obtained through calibration, or may be set according to an actual situation. This is not limited herein.

In an optional embodiment, as shown in FIG. 2, the determining the first path point according to the second path point and the preview distance includes:
S201: Determine the preview location on the planned path according to the second path point and the preview distance.
S202: Determine first trajectory points adjacent to the preview location on the planned path.
S203: Perform interpolation between the first trajectory points to obtain a plurality of first data points.
S204: Determine the first path point according to the first data points adjacent to the preview location.

For example, the preview location of the vehicle on the planned path may be determined according to the second path point and the preview distance. Data of trajectory points on the planned path is known, but data of the preview location of the vehicle is unknown. If the data of the preview location of the vehicle is directly determined by using data of the first trajectory points, a large error may occur. Therefore, interpolation may be performed between the first trajectory points, and data corresponding to the first data points obtained through interpolation may be obtained through calculation according to the data of the first trajectory points. A distance between a first data point obtained through interpolation and the preview location of the vehicle is less than a distance between a first trajectory point and the preview location of the vehicle, and using the first data point to calculate data that corresponds to the first path point corresponding to the preview location of the vehicle on the planned path obtains more accurate data of the first path point.

For example, a significant change value sometimes occurs in a curvature of the planned path of the vehicle, for example, a change from 0 degrees to 90 degrees. In this case, although the steering wheel angle can meet a requirement, and the planned path is followed by quickly adjusting the steering wheel angle, the steering wheel may experience back-and-forth movement, and the vehicle may shake greatly. Driving experience of a driver and a passenger is affected, and the tracking deviations may occur near a curvature discontinuity point. Therefore, when the curvature information of the planned path represents that a change value of the curvature of the planned path is greater than or equal to a preset curvature change threshold, the steering wheel angle is controlled to remain unchanged, and the four independent wheel motors of the vehicle are controlled to output the torque, to control the vehicle to drive along the planned path. The preset curvature change threshold may be set according to an actual situation. This is not limited herein. The change value of the curvature may be determined according to a difference between curvatures at two adjacent moments. When the curvature information represents that the change value of the curvature of the planned path is greater than or equal to the preset curvature change threshold, it may be determined that the curvature at the preview location of the vehicle of the planned path suddenly changes.

For example, if a turning radius corresponding to the curvature of the planned path of the vehicle is small, a requirement may not be met when vehicle steering is controlled according to only the electric power steering system, and the tracking deviation may occur. Therefore, when the curvature information of the planned path represents that the change value of the curvature of the planned path is greater than or equal to the preset curvature change threshold, or the turning radius corresponding to the curvature information is less than the turning radius achieved when vehicle steering is controlled at the maximum steering wheel angle, the steering wheel angle may be controlled to reach the maximum steering wheel angle, and the four independent wheel motors of the vehicle may be controlled to output the torque to control the vehicle to drive along the planned path. When there is a large tracking deviation, the planned path is followed by controlling vehicle steering by using the electric power steering system in combination with the torque output by the four independent wheel motors.

In addition, when vehicle steering is controlled by using only the electric power steering system, the turning radius achieved when steering is controlled at the maximum steering wheel angle may be referred to as a minimum turning radius. When the turning radius corresponding to the curvature information of the planned path is greater than or equal to the minimum turning radius, the vehicle may be controlled to follow the planned path by using only the electric power steering system, or the planned path may be followed by controlling vehicle steering by using the electric power steering system in combination with the torque output by the four independent wheel motors. When the turning radius corresponding to the curvature information of the planned path is less than the minimum turning radius, the vehicle may be controlled to follow the planned path by controlling vehicle steering by using the electric power steering system in combination with the torque output by the four independent wheel motors.

In an optional embodiment, the determining a tracking deviation between a position of the vehicle and a planned path of the vehicle includes:
determining a reference data point adjacent to the position of the vehicle on the planned path; and
determining the tracking deviation according to the reference data point and pose information corresponding to the position of the vehicle.

For example, when the vehicle drives along the planned path, a path point of the vehicle during driving may deviate from the planned path, and the tracking deviation may occur. The position of the vehicle is projected onto the planned path. The position of the vehicle may not be on a driving trajectory corresponding to the planned path, but is outside the driving trajectory, and the reference point is located on the driving trajectory corresponding to the planned path. Therefore, after the reference data point adjacent to the position of the vehicle is determined, the tracking deviation at the position of the vehicle when the vehicle follows the planned path may be determined according to the reference data point and the pose information of the vehicle, to control the four independent wheel motors of the vehicle to output the torque, to compensate for the tracking deviation occurring when the vehicle follows the planned path, and enable the vehicle to return to the planned path.

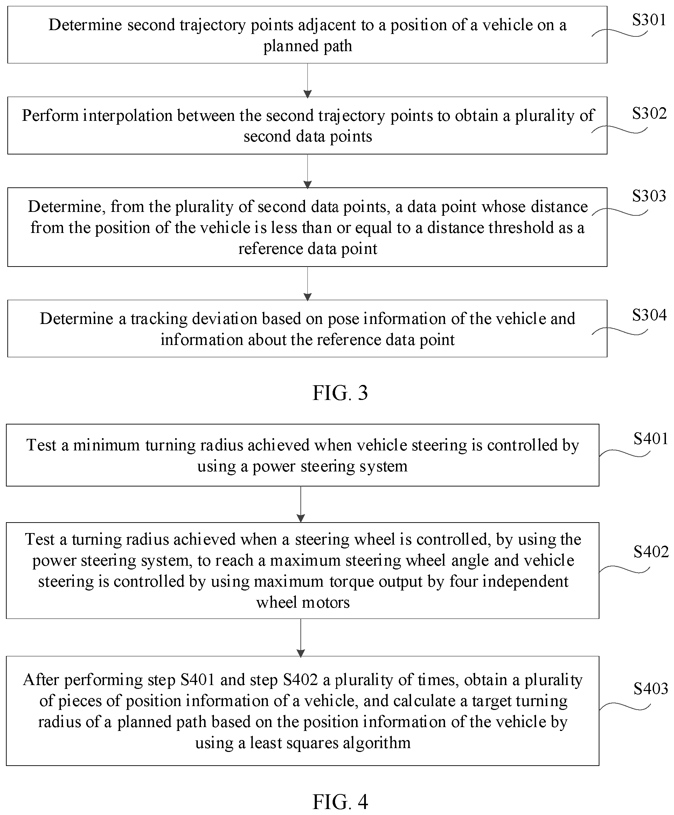

In an optional embodiment, as shown in FIG. 3, the determining a reference data point adjacent to the position of the vehicle on the planned path includes the following steps.

S301: Determine second trajectory points adjacent to the position of the vehicle on the planned path.

S302: Perform interpolation between the second trajectory points to obtain a plurality of second data points.

S303: Determine, from the plurality of second data points, a data point whose distance from the position of the vehicle is less than or equal to a distance threshold as the reference data point.

For example, the planned path includes a plurality of discrete trajectory points, and each trajectory point includes information such as coordinates, curvature information, a vehicle heading angle, a speed, and a distance. The second trajectory points adjacent to the position of the vehicle on the planned path may be determined according to the pose information corresponding to the position of the vehicle. Data of the second trajectory points on the planned path is known, but data of the position of the vehicle is unknown. If the data of the second trajectory points is directly used as the reference data point, a large error may occur in the tracking deviation obtained through calculation. Therefore, interpolation may be performed between the second trajectory points, and data corresponding to the second data points obtained through interpolation may be obtained through calculation according to the data of the second trajectory points. A linear interpolation method may be used. A data point whose distance from the position of the vehicle is less than or equal to the distance threshold is determined from the plurality of second data points as the reference data point. Alternatively, a data point that is closest to the position of the vehicle may be determined from the plurality of second data points as the reference data point. Alternatively, an average value of data of a plurality of data points whose distances from the position of the vehicle are less than or equal to the distance threshold may be determined as data of the reference data point.

After step S303, the method may further include:
S304: Determine the tracking deviation according to the pose information of the vehicle and information about the reference data point.

For example, the tracking deviation may include a lateral error and a heading error. The lateral error and the heading error may be determined according to first coordinates of the pose information of the vehicle on the planned path and second coordinates of the reference data point on the planned path. After the heading error and the lateral error are obtained, a to-be-compensated angle corresponding to the tracking deviation of the vehicle may be determined. Specifically, if the first coordinates are represented as (xᵥ, yᵥ, θᵥ), and the second coordinates are represented as (xᵣ, yᵣ, θᵣ), the lateral error and the heading error may be calculated by using the following calculation formula: $\left\{\begin{matrix}Δθ = {θ}_{v} - {θ}_{r} \\ Δσ = cos {θ}_{r} \times \left({y}_{v}-{y}_{r}\right) - sin {θ}_{r} \times \left({x}_{v}-{x}_{r}\right)\end{matrix}\right.$

Δθ is the heading error, Δσ is the lateral error, θᵥ is the vehicle heading angle, θᵣ is a curvature of the reference data point, xᵥ is X-axis coordinate data of the first path point on the planned path, yᵥ is Y-axis coordinate data of the first path point on the planned path, xᵣ is X-axis coordinate data of the reference data point on the planned path, and yᵣ is Y-axis coordinate data of the reference data point on the planned path.

In an optional embodiment, the controlling, according to the tracking deviation, four independent wheel motors of the vehicle to output torque, to enable the vehicle to return to the planned path includes:
determining, according to the tracking deviation, a required steering wheel angle for the vehicle to return to the planned path; and
according to the required steering wheel angle, controlling a steering wheel angle and controlling the four independent wheel motors to output the torque, so that a sum of the steering wheel angle and a compensation angle corresponding to the torque output by the four independent wheel motors meets the required steering wheel angle.

For example, the steering wheel angle is angular displacement of the steering wheel measured with a position of the steering wheel during straight vehicle driving as a reference. For a vehicle whose steering is controlled by using only the electric power steering system, steering wheels are front wheels, an average steering angle of left and right steered wheels is zero during straight vehicle driving, a maximum steering wheel angle achieved when turned laterally from a reference position generally ranges from 540 degrees to 630 degrees, and a corresponding maximum wheel steering angle approximately ranges from 40 degrees to 42 degrees. The steering wheel angle may be obtained by using a steering wheel angle sensor, which is installed in a steering pillar below the steering wheel and may be classified into an analog steering wheel angle sensor and a digital steering wheel angle sensor. The required steering wheel angle is a required steering wheel angle for the vehicle to return to the planned path, and is obtained according to the steering wheel angle during vehicle driving and the to-be-compensated angle corresponding to the tracking deviation. The four independent wheel motors are controlled to output the torque, and a compensation angle corresponding to a magnitude of the output torque may be used to compensate for the to-be-compensated angle.

In an optional embodiment, the according to the required steering wheel angle, controlling a steering wheel angle and controlling the four independent wheel motors to output the torque includes:
according to the required steering wheel angle, controlling the steering wheel angle to remain unchanged, and determining a difference between the steering wheel angle and the required steering wheel angle as a to-be-compensated angle; and
controlling the four independent wheel motors to output the torque to compensate for the to-be-compensated angle.

For example, the planned path is followed by adjusting the steering wheel angle, the steering wheel may experience back-and-forth movement, and the vehicle shakes greatly. Driving experience of a driver and a passenger is affected. Therefore, when the four independent wheel motors are controlled to output the torque, the steering wheel angle may be controlled to remain unchanged, and the four independent wheel motors of the vehicle may be controlled to output the torque to compensate for the to-be-compensated angle, to control the vehicle to return to the planned path and continue to drive.

According to the present disclosure, the steering wheel angle may not be changed, but the to-be-compensated angle corresponding to the tracking deviation is compensated by using the torque output by the four independent wheel motors, and the to-be-compensated angle may be a difference value between the steering wheel angle and the required steering wheel angle. In this way, after the tracking deviation is compensated, the vehicle may return to the planned path and continue to drive, the vehicle can more accurately drive along the planned path, thereby reducing back-and-forth movement of the steering wheel caused by external disturbance, and improving driving experience of the driver.

In an optional embodiment, the according to the required steering wheel angle, controlling a steering wheel angle and controlling the four independent wheel motors to output the torque includes:
when the required steering wheel angle is less than or equal to a maximum steering wheel angle, according to the required steering wheel angle, controlling the steering wheel angle to gradually increase, and controlling the four independent wheel motors to output the torque, to compensate for a difference value between an increased steering wheel angle and the required steering wheel angle; and
when the required steering wheel angle is greater than the maximum steering wheel angle, controlling the steering wheel angle to increase to the maximum steering wheel angle, and controlling the four independent wheel motors to output the torque, to compensate for a difference value between the maximum steering wheel angle and the required steering wheel angle.

For example, when the required steering wheel angle is less than or equal to a maximum steering wheel angle, the steering wheel angle may be controlled to change smoothly by controlling vehicle steering by using the electric power steering system in combination with the torque output by the four independent wheel motors. In addition, the steering wheel angle may be compensated by using the torque output by the four independent wheel motors, to meet the required steering wheel angle of the vehicle. In this process, if the required steering wheel angle is less than or equal to the maximum steering wheel angle, the torque output by the four independent wheel motors increases first and then decreases gradually, and when the steering wheel angle reaches a target angle, the torque output by the four independent wheel motors decreases to zero; if the required steering wheel angle is greater than the maximum steering wheel angle, the torque output by the four independent wheel motors first increases and then gradually decreases to a first target value; if the required steering wheel angle is greater than the maximum steering wheel angle, and a current steering wheel angle is equal to the maximum steering wheel angle, the torque output by the four independent wheel motors gradually increases to a second target value.

For example, when the required steering wheel angle is greater than the maximum steering wheel angle, the steering wheel angle is controlled to increase to the maximum steering wheel angle, and the four independent wheel motors are controlled to output the torque, to compensate for a difference value between the maximum steering wheel angle and the required steering wheel angle. Alternatively, the steering wheel angle may be controlled to remain unchanged, and the steering wheel angle may be compensated by using the torque output by the four independent wheel motors, to meet the required steering wheel angle. When the steering wheel angle is controlled to increase to the maximum steering wheel angle, the steering wheel angle may be directly controlled to reach the maximum steering wheel angle, or the steering wheel angle may be controlled to gradually increase to the maximum steering wheel angle, and the four independent wheel motors may be controlled to output torque.

In an optional embodiment, the method further includes:
obtaining the pose information of the vehicle, parking space information around the vehicle, and obstacle information around the vehicle; and
performing trajectory planning according to the pose information, the parking space information, the obstacle information, and a target turning radius achieved when the vehicle is driven by the four independent wheel motors, to obtain the planned path, where the target turning radius is less than a turning radius achieved when the vehicle steers at the maximum steering wheel angle.

For example, the pose information of the vehicle may be obtained in real time by using an RTK (Real-time kinematic, real-time differential positioning)-based high-precision positioning apparatus on the vehicle. When the vehicle plans the driving path, a method for planning the driving path is determined according to the parking space information, the obstacle information, and a current vehicle pose. Specifically, a geometric planning algorithm may be used. The vehicle includes the four independent wheel motors. During path planning, the target turning radius achieved when the vehicle is driven by the four independent wheel motors may be taken into account, and a trajectory radius may not be less than the target turning radius. The target turning radius is determined by controlling vehicle steering by using the electric power steering system in combination with the torque output by the four independent wheel motors. The target turning radius is less than the turning radius achieved when the vehicle is controlled, by using the electric power steering system, to steer at the maximum steering wheel angle.

For example, as shown in FIG. 4, a method for determining a target turning radius includes the following steps.

S401: Test a minimum turning radius achieved when vehicle steering is controlled by using an electric power steering system.

For example, in a spacious and flat area, a vehicle may be controlled by using the electric power steering system to drive one full circle at an idle speed with a steering wheel at a maximum steering wheel angle, and position information of the vehicle is read from an RTK-based high-precision positioning apparatus.

S402: Test a turning radius achieved when the steering wheel is controlled, by the electric power steering system, to reach the maximum steering wheel angle and vehicle steering is controlled by using maximum torque output by four independent wheel motors.

For example, in the spacious and flat area, the four independent wheel motors may be controlled to apply the maximum torque, and the vehicle may be controlled to drive one full circle at an idle speed with the steering wheel at the maximum steering wheel angle, and the position information of the vehicle is read from the RTK-based high-precision positioning apparatus.

S403: After performing step S401 and step S402 a plurality of times, obtain a plurality of pieces of position information of the vehicle, and calculate a target turning radius of a planned path according to the position information of the vehicle by using a least squares algorithm.

In an optional embodiment, determining a second path point corresponding to a position of the vehicle on the planned path includes:
obtaining pose information and the planned path of the vehicle; and
determining, according to the pose information, the second path point corresponding to the position of the vehicle on the planned path.

For example, the second path point, corresponding to the position of the vehicle, on the planned path may be determined according to the pose information of the vehicle and the planned path, and the four independent wheel motors of the vehicle may be controlled according to the second path point and a steering wheel angle to output torque, to compensate for a tracking deviation occurring when the vehicle follows the planned path, to enable the vehicle to return to the planned path.

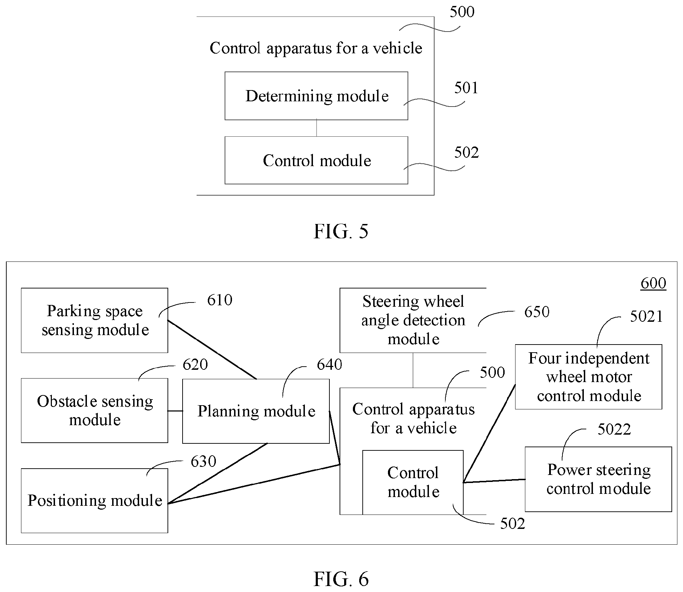

FIG. 5 is a block diagram of a control apparatus for a vehicle according to an example embodiment. As shown in FIG. 5, the control apparatus 500 for the vehicle includes a determining module 501 and a control module 502.

The determining module 501 is configured to determine a tracking deviation between a position of the vehicle and a planned path of the vehicle.

The control module 502 is configured to control, according to the tracking deviation, four independent wheel motors of the vehicle to output torque, to enable the vehicle to return to the planned path.

In an optional embodiment, the control module 502 includes:
a first determining submodule, configured to determine a first path point of a preview location of the vehicle on the planned path; and
a control submodule, configured to control, according to the first path point and the tracking deviation, the four independent wheel motors of the vehicle to output the torque, to enable the vehicle to return to the planned path.

In an optional embodiment, the control apparatus 500 for the vehicle further includes:
an obtaining module, configured to obtain vehicle speed information of a vehicle.

The first determining submodule includes:
a second determining submodule, configured to determine a second path point corresponding to the position of the vehicle on the planned path; and
a third determining submodule, configured to determine the first path point according to the second path point and the vehicle speed information.

In an optional embodiment, the third determining submodule includes:
a fourth determining submodule, configured to determine a preview distance according to the vehicle speed information; and
a fifth determining submodule, configured to determine the first path point according to the second path point and the preview distance.

In an optional embodiment, the fifth determining submodule is configured to:
determine the preview location on the planned path according to the second path point and the preview distance;
determine first trajectory points adjacent to the preview location on the planned path;
perform interpolation between the first trajectory points to obtain a plurality of first data points; and
determine the first path point according to the first data points adjacent to the preview location.

In an optional embodiment, the determining module 501 includes:
a sixth determining submodule, configured to determine a reference data point adjacent to the position of the vehicle on the planned path; and
a seventh determining submodule, configured to determine the tracking deviation according to the reference data point and pose information corresponding to the position of the vehicle.

In an optional embodiment, the sixth determining submodule is specifically configured to:
determine second trajectory points adjacent to the position of the vehicle on the planned path;
perform interpolation between the second trajectory points to obtain a plurality of second data points; and
determine, from the plurality of second data points, a data point whose distance from the position of the vehicle is less than or equal to a distance threshold as the reference data point.

In an optional embodiment, the control module 502 includes:
a requirement determining module, configured to determine, according to the tracking deviation, a required steering wheel angle for the vehicle to return to the planned path; and
a requirement compensation module, configured to: according to the required steering wheel angle, control a steering wheel angle and control the four independent wheel motors to output the torque, so that a sum of the steering wheel angle and a compensation angle corresponding to the torque output by the four independent wheel motors meets the required steering wheel angle.

In an optional embodiment, the requirement compensation module is specifically configured to:
according to the required steering wheel angle, control the steering wheel angle to remain unchanged, and determine a difference between the steering wheel angle and the required steering wheel angle as a to-be-compensated angle; and
control the four independent wheel motors to output the torque to compensate for the to-be-compensated angle.

In an optional embodiment, the requirement compensation module is specifically configured to:
when the required steering wheel angle is less than or equal to a maximum steering wheel angle, according to the required steering wheel angle, control the steering wheel angle to gradually increase and control the four independent wheel motors to output the torque, to compensate for a difference value between an increased steering wheel angle and the required steering wheel angle; and
when the required steering wheel angle is greater than the maximum steering wheel angle, control the steering wheel angle to increase to the maximum steering wheel angle, and control the four independent wheel motors to output the torque, to compensate for a difference value between the maximum steering wheel angle and the required steering wheel angle.

In an optional embodiment, the control apparatus 500 for the vehicle includes:
an information obtaining module, configured to obtain the pose information of the vehicle, parking space information around the vehicle, and obstacle information around the vehicle; and
a planning module, configured to perform trajectory planning according to the pose information, the parking space information, the obstacle information, and a target turning radius achieved when the vehicle is driven by the four independent wheel motors, to obtain the planned path, where the target turning radius is less than a turning radius achieved when the vehicle steers at the maximum steering wheel angle.

In an optional embodiment, the second determining submodule is specifically configured to:
obtain the pose information and the planned path of the vehicle; and
determine, according to the pose information, the second path point corresponding to the position of the vehicle on the planned path.

For the control apparatus 500 for the vehicle in the foregoing embodiment, a specific manner of performing an operation by each module is described in detail in embodiments related to the vehicle control method. Details are not described herein again.

FIG. 6 is a block diagram of a vehicle control system according to an example embodiment. As shown in FIG. 6, the vehicle control system 600 includes a control apparatus 500 for a vehicle, a parking space sensing module 610, an obstacle sensing module 620, a positioning module 630, a planning module 640, and a steering wheel angle detection module 650.

The parking space sensing module 610 is configured to detect parking space information around a vehicle.

The obstacle sensing module 620 is configured to detect obstacle information around the vehicle.

The positioning module 630 is configured to detect pose information of the vehicle.

The planning module 640 is connected to the parking space sensing module 610, the obstacle sensing module 620, and the positioning module 630, and is configured to perform trajectory planning according to the parking space information, the obstacle information, and the pose information, to obtain a planned path.

The steering wheel angle detection module 650 is configured to detect a steering wheel angle.

The control apparatus 500 for the vehicle is connected to the planning module 640, the positioning module 630, and the steering wheel angle detection module 650, and is configured to: determine a tracking deviation between a position of the vehicle and a planned path of the vehicle; and control, according to the tracking deviation, four independent wheel motors of the vehicle to output torque, to enable the vehicle to return to the planned path.

A control module 502 of the control apparatus 500 for the vehicle is connected to a four independent wheel motor control module 5021 and a power steering control module 5022. The four independent wheel motor control module 5021 is configured to control, based on a motor control instruction of the control module 502, the four independent wheel motors to output the torque. The power steering control module 5022 is configured to control a size of the steering wheel angle based on a steering wheel angle control instruction of the control module 502. By using the four independent wheel motor control module 5021 and the power steering control module 5022, the four independent wheel motors of the vehicle may be controlled according to the tracking deviation to output the torque, to enable the vehicle to return to the planned path.

The present disclosure further provides a computer-readable storage medium. The computer-readable storage medium stores computer program instructions, and when the program instructions are executed by a processor, the vehicle control method in the present disclosure is implemented.

The present disclosure further provides a vehicle. The vehicle includes:
a storage apparatus, where the storage apparatus stores a computer program; and
a control apparatus, where the control apparatus is configured to execute a computer program, to implement the vehicle control method in the present disclosure.

In an optional embodiment, the vehicle includes four motors, and each motor correspondingly drives one wheel.

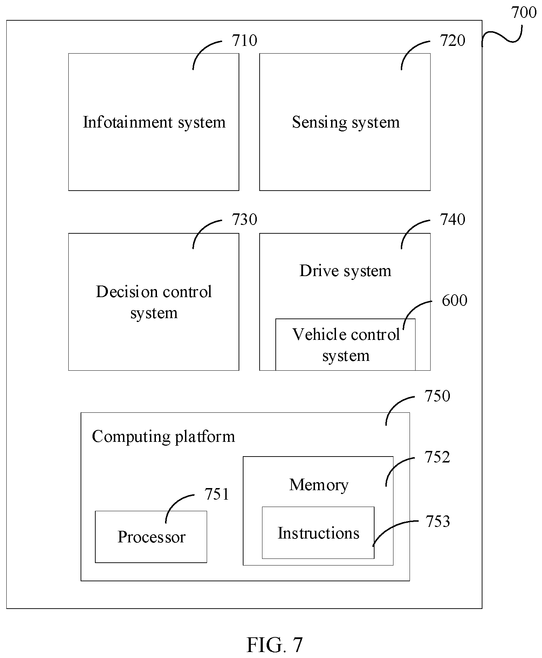

FIG. 7 is a block diagram of a vehicle 700 according to an example embodiment. For example, the vehicle 700 may be a hybrid vehicle, a non-hybrid vehicle, an electric vehicle, a fuel cell vehicle, or another type of vehicle. The vehicle 700 may be an autonomous vehicle or a semi-autonomous vehicle.

Refer to FIG. 7. The vehicle 700 may include various subsystems, such as an infotainment system 710, a sensing system 720, a decision control system 730, a drive system 740, and a computing platform 750. The vehicle 700 may further include more or fewer subsystems, and each subsystem may include a plurality of components. In addition, each subsystem and component of the vehicle 700 may be connected to each other in a wired or wireless manner.

In some embodiments, the infotainment system 710 may include a communication system, an entertainment system, a navigation system, and the like.

The sensing system 720 may include several types of sensors that are configured to sense information about an ambient environment of the vehicle 700. For example, sensing system 720 may include a global positioning system (the global positioning system may be a GPS system, a BeiDou system, or another positioning system), an inertial measurement unit (inertial measurement unit, IMU), a lidar, a millimeter-wave radar, an ultrasonic radar, or a camera apparatus.

The decision control system 730 may include a computing system, a vehicle control unit, a steering system, a throttle, and a braking system.

The drive system 740 may include a component providing power to the vehicle 700. In an embodiment, the drive system 740 may include an engine, an energy source, a vehicle control system 600, and a wheel. The engine may be one or a combination of an internal combustion engine, a motor, and an air compression engine. The engine can convert energy provided by the energy source into mechanical energy.

Some or all functions of the vehicle 700 are controlled by the computing platform 750. The computing platform 750 may include at least one processor 751 and a memory 752. The processor 751 may execute instructions 753 stored in the memory 752.

The processor 751 may be any conventional processor like a commercially available CPU. The processor may further include an image processor (Graphic Process Unit, GPU), a field programmable gate array (Field Programmable Gate Array, FPGA), a system on chip (System on Chip, SOC), an application-specific integrated circuit (Application-Specific Integrated Circuit, ASIC), or a combination thereof.

The memory 752 may be implemented by any type of volatile or non-volatile storage device or a combination thereof, for example, a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disc.

In addition to the instructions 753, the memory 752 may further store data, such as a road map, route information, a position, a direction, and a speed of a vehicle. The data stored in the memory 752 may be used by the computing platform 750.

In this embodiment of the present disclosure, the processor 751 may execute the instructions 753, to complete all or some of the steps of the foregoing vehicle control method.

In another example embodiment, a computer program product is further provided. The computer program product includes a computer program executable by a programmable apparatus. The computer program includes a code portion that may be used to perform the foregoing vehicle control method when executed by the programmable apparatus.

A person skilled in the art may easily figure out another implementation solution of the present disclosure after considering this specification and practicing the present disclosure herein. This application is intended to cover any variations, functions, or adaptive changes of the present disclosure. These variations, functions, or adaptive changes comply with general principles of the present disclosure, and include common knowledge or a commonly used technical means in the technical field that is not disclosed in the present disclosure. The specification and the embodiments are merely considered as examples, and the actual scope and the spirit of the present disclosure are pointed out by the following claims.

It should be understood that the present disclosure is not limited to the accurate structures that are described in the foregoing and that are shown in the accompanying drawings, and modifications and changes may be made without departing from the scope of the present disclosure. The scope of the present disclosure is limited only by the appended claims.

## Claims

1. A vehicle control method, comprising:
determining a tracking deviation between a position of a vehicle and a planned path of the vehicle; and
controlling, based on the tracking deviation, four independent wheel motors of the vehicle to output torque, to enable the vehicle to return to the planned path.

2. The method according to claim 1, wherein the controlling, according to the tracking deviation, four independent wheel motors of the vehicle to output torque, to enable the vehicle to return to the planned path comprises:
determining a first path point of a preview location of the vehicle on the planned path; and
controlling, according to the first path point and the tracking deviation, the four independent wheel motors of the vehicle to output the torque, to enable the vehicle to return to the planned path.

3. The method according to claim 1 or 2, wherein the method further comprises:
obtaining vehicle speed information of the vehicle; and
the determining a first path point of a preview location of the vehicle on the planned path comprises:
determining a second path point corresponding to the position of the vehicle on the planned path; and
determining the first path point according to the second path point and the vehicle speed information.

4. The method according to claim 3, wherein the determining the first path point according to the second path point and the vehicle speed information comprises:
determining a preview distance according to the vehicle speed information; and
determining the first path point according to the second path point and the preview distance.

5. The method according to claim 4, wherein the determining the first path point according to the second path point and the preview distance comprises:
determining the preview location on the planned path according to the second path point and the preview distance;
determining first trajectory points adjacent to the preview location on the planned path;
performing interpolation between the first trajectory points to obtain a plurality of first data points; and
determining the first path point according to the first data points adjacent to the preview location.

6. The method according to any one of claims 1 to 5, wherein the determining a tracking deviation between a position of the vehicle and a planned path of the vehicle comprises:
determining a reference data point adjacent to the position of the vehicle on the planned path; and
determining the tracking deviation according to the reference data point and pose information corresponding to the position of the vehicle.

7. The method according to claim 6, wherein the determining a reference data point adjacent to the position of the vehicle on the planned path comprises:
determining second trajectory points adjacent to the position of the vehicle on the planned path;
performing interpolation between the second trajectory points to obtain a plurality of second data points; and
determining, from the plurality of second data points, a data point whose distance from the position of the vehicle is less than or equal to a distance threshold as the reference data point.

8. The method according to any one of claims 1 to 7, wherein the controlling, according to the tracking deviation, four independent wheel motors of the vehicle to output torque, to enable the vehicle to return to the planned path comprises:
determining, according to the tracking deviation, a required steering wheel angle for the vehicle to return to the planned path; and
according to the required steering wheel angle, controlling a steering wheel angle and controlling the four independent wheel motors to output the torque, so that a sum of the steering wheel angle and a compensation angle corresponding to the torque output by the four independent wheel motors meets the required steering wheel angle.

9. The method according to claim 8, wherein the according to the required steering wheel angle, controlling a steering wheel angle and controlling the four independent wheel motors to output the torque comprises:
according to the required steering wheel angle, controlling the steering wheel angle to remain unchanged, and determining a difference between the steering wheel angle and the required steering wheel angle as a to-be-compensated angle; and
controlling the four independent wheel motors to output the torque to compensate for the to-be-compensated angle.

10. The method according to claim 8, wherein the according to the required steering wheel angle, controlling a steering wheel angle and controlling the four independent wheel motors to output the torque comprises:
when the required steering wheel angle is less than or equal to a maximum steering wheel angle, according to the required steering wheel angle, controlling the steering wheel angle to gradually increase and controlling the four independent wheel motors to output the torque, to compensate for a difference value between an increased steering wheel angle and the required steering wheel angle; and
when the required steering wheel angle is greater than the maximum steering wheel angle, controlling the steering wheel angle to increase to the maximum steering wheel angle, and controlling the four independent wheel motors to output the torque, to compensate for a difference value between the maximum steering wheel angle and the required steering wheel angle.

11. The method according to any one of claims 1 to 10, wherein the method further comprises:
obtaining the pose information of the vehicle, parking space information around the vehicle, and obstacle information around the vehicle; and
performing trajectory planning according to the pose information, the parking space information, the obstacle information, and a target turning radius achieved when the vehicle is driven by the four independent wheel motors, to obtain the planned path, wherein the target turning radius is less than a turning radius achieved when the vehicle steers at the maximum steering wheel angle.

12. The method according to any one of claims 3 to 5, wherein the determining a second path point corresponding to the position of the vehicle on the planned path comprises:
obtaining the pose information and the planned path of the vehicle; and
determining, according to the pose information, the second path point corresponding to the position of the vehicle on the planned path.

13. A computer-readable storage medium, wherein the computer-readable storage medium stores computer program instructions, and when the program instructions are executed by a processor, the vehicle control method according to any one of claims 1 to 12 is implemented.

14. A vehicle, comprising:
a storage apparatus, configured to store a computer program; and
a processing apparatus, configured to execute the computer program to implement the vehicle control method according to any one of claims 1 to 12.

15. The vehicle according to claim 14, wherein the vehicle comprises four motors, and each motor correspondingly drives one wheel.
